# EUROPÄISCHE PATENTANMELDUNG

(11) **EP 4 344 935 A1**
(43) Veröffentlichungstag der Anmeldung: **03.04.2024**
(21) Anmeldenummer: 23200814.4
(22) Anmeldetag: 29.09.2023
(51) Int. Cl.: B60L 53/18, H02H 5/04

(54) **VERSORGUNGSSTATION FÜR ELEKTRISCH BETREIBBARE FAHRZEUGE**

(30) Priorität: 30.09.2022 DE 102022125282
(71) Anmelder: Compleo Charging Solutions GmbH & Co. KG, 44379 Dortmund (DE)
(72) Erfinder: Dammann, Michael, 44141 Dortmund (DE)
(74) Vertreter: Wickord, Wiro

(57) **Zusammenfassung**

Die Erfindung betrifft eine Versorgungsstation für ein elektrisch betreibbares Fahrzeug mit einer Temperaturüberwachungsfunktion umfassend ein Anschlusselement (1) mit einer Mehrzahl von Anschlusspins (2, 3, 4, 5, 6, 7, 8) sowie wenigstens eine Ladeleitung (L1, L2, L3, N) und wenigstens eine Signalleitung (CP), wobei die Ladeleitung (L1, L2, L3, N) zu einem Anschlusspin (2, 3, 4, 5) des Anschlusselements geführt ist und der Bereitstellung der Ladeleistung für das elektrisch betreibbare Fahrzeug dient und wobei die Signalleitung (CP) von einer Steuereinheit zu einem weiteren Anschlusspin (6) des Anschlusselements (1) geführt ist und eingerichtet ist, Signale zu übertragen, wobei in der Signalleitung (CP) eine Temperatursicherung (9, 9.1, 9.2, 9.3, 9.4) vorgesehen ist, welche dazu eingerichtet ist, beim Überschreiten einer Auslösetemperatur die Signalleitung (CP) selbsttätig zu unterbrechen, und dass die wenigstens eine Ladeleitung (L1, L2, L3, N) sich derart benachbart zu der Temperatursicherung (9, 9.1, 9.2, 9.3, 9.4) erstreckt, dass eine Temperaturerhöhung in der wenigstens einen Ladeleitung (L1, L2, L3, N) von der Temperatursicherung (9, 9.1, 9.2, 9.3, 9.4) detektierbar ist.

## Beschreibung

Die Erfindung betrifft eine Versorgungsstation für ein elektrisch betreibbares Fahrzeug mit einer Temperaturüberwachungsfunktion. Die Versorgungsstation umfasst ein Anschlusselement mit einer Mehrzahl von Anschlusspins sowie wenigstens eine Ladeleitung und wenigstens eine Signalleitung, wobei die Ladeleitung zu einem Anschlusspin des Anschlusselements geführt ist und der Bereitstellung der Ladeleistung für das elektrisch betreibbare Fahrzeug dient und wobei die Signalleitung von einer Steuereinheit zu einem weiteren Anschlusspin des Anschlusselements geführt ist und der Kommunikation mit dem elektrisch betreibbaren Fahrzeug dient.

Eine Vielzahl von Versorgungsstationen wird heute betrieben, ohne dass eine Überwachung einer Temperatur einer die Ladeleistung bereitstellenden Ladeleitung oder anderer thermisch belasteter Funktionskomponenten der Versorgungsstation während des Ladevorgangs stattfindet. Insbesondere AC-Versorgungsstationen, welche typischerweise eine vergleichsweise geringe Ladeleistung bereitstellen und vielfach als Wallbox im privaten Bereich installiert sind, verzichten nicht zuletzt aus Kostengründen auf die Temperaturüberwachung.

Bekannt sind zudem Versorgungsstationen, bei denen eine Betriebstemperatur der an der Leistungsbereitstellung mitwirkenden Funktionskomponenten überwacht wird. Typischerweise werden hierfür Temperatursensoren verwendet, die die Temperatur messen und den Messwert an eine Steuerung der Versorgungsstation senden. Die Steuerung wertet den Temperaturmesswert aus und unterbricht den Ladevorgang oder reduziert die Leistungsabgabe in Abhängigkeit von der Temperatur, wenn die gemessene Betriebstemperatur einen kritischen Wert erreicht oder übersteigt. Eine derartige sensorische Temperaturüberwachung kommt vorwiegend bei DC-Versorgungsstationen zur Anwendung, da diese eine vergleichsweise hohe Ladeleistung bereitstellen und sich dabei stärker erwärmen als AC-Versorgungsstationen. Die Kosten der sensorischen Temperaturüberwachung fallen hier zugleich weniger stark ins Gewicht, da die DC-Versorgungsstationen erheblich teurer sind als handelsübliche AC-Versorgungsstationen.

Aufgabe der vorliegenden Erfindung ist es, eine Versorgungsstation so weiterzubilden, dass eine einfache, zuverlässige und kostengünstige Temperaturüberwachung ermöglicht wird.

Zur Lösung der Aufgabe ist die Erfindung in Verbindung mit dem Oberbegriff des Patentanspruchs 1 dadurch gekennzeichnet, dass in der Signalleitung eine Temperatursicherung vorgesehen ist, welche dazu eingerichtet ist, beim Überschreiten einer Auslösetemperatur die Signalleistung selbsttätig zu unterbrechen, und dass die wenigstens eine Ladeleitung sich derart benachbart zu der Temperatursicherung erstreckt, dass eine Temperaturerhöhung in der wenigstens einen Ladeleitung von der Temperatursicherung detektierbar ist.

Der besondere Vorteil der Erfindung besteht in der kostengünstigen und einfachen Realisierung der Temperaturüberwachungsfunktion. Die Temperatursicherung stellt ein kostengünstiges und zugleich zuverlässig wirkendes Bauteil dar, welches die Signalleitung im Fehlerfall selbsttätig unterbricht. Auf teure sensorische Elemente zur Temperaturerfassung, eine Sensorsignalleitung und eine Aufbereitung, Verarbeitung und Auswertung des Sensorsignals wird demzufolge verzichtet. Es bedarf lediglich der Integration einer Temperatursicherung in die Signalleitung und darüber hinaus der räumlichen Zuordnung der Ladeleitung zu der Temperatursicherung.

Zudem ist es möglich, herkömmliche Versorgungsstationen in einfacher Weise nachträglich mit der Temperatursicherung auszustatten und so das Sicherheitsniveau der bereits ausgelieferten, installierten und genutzten Versorgungsstationen nachträglich zu verbessern. Da die Temperatursicherung in die Signalleitung integriert wird und keine Arbeiten an den Ladeleitungen vorzunehmen sind beziehungsweise die Ladeleitungen im Rahmen der Nachrüstarbeiten insbesondere nicht getrennt werden müssen, hat die Nachrüstung keine Auswirkung auf das Eichrecht, welches gegebenenfalls zu beachten sein wird.

Beispielsweise kann die Ladeleitung mit ihrer mantelseitigen Isolationsschicht unmittelbar an die Temperatursicherung angelegt werden oder einen derart geringen Abstand zu der Temperatursicherung aufweisen, dass eine Temperaturerhöhung in der Ladeleitung zu einer Temperaturerhöhung in der Temperatursicherung führt, das heißt von ihr detektiert wird.

Erfindungsgemäß unterbricht die Temperatursicherung die Signalleitung selbsttätig. Eines aktiven Eingriffs beispielsweise vonseiten einer Steuerung der Versorgungsstation bedarf es nicht. Auf einen Schalter, der auf ein Betätigungssignal hin die Signalleitung unterbricht, kann insofern verzichtet werden.

Beispielsweise kann die Temperatursicherung als eine Schmelzsicherung ausgebildet sein. Sie überträgt beziehungsweise leitet die über die Signalleitung bereitgestellten Signale im Normalbetriebszustand und unterbricht die Signalleitung und damit die Signalübertragung, wenn eine bauartspezifische Auslösetemperatur überschritten wird.

Die Auslösetemperatur wird abhängig von der Konfiguration der Versorgungsstation so gewählt, dass die Signalleitung unterbrochen wird, bevor die Versorgungsstation infolge der thermischen Überlastung in einen kritischen Betriebszustand gerät und/oder wesentliche Funktionskomponenten der Versorgungsstation beschädigt werden. Zugleich wird die Auslösetemperatur so gewählt, dass sie oberhalb der üblichen Betriebstemperatur der Versorgungsstation liegt. Bewährt hat sich hier eine Auslösetemperatur, die im Bereich von zirka 85 bis 105 °C liegt. Unterhalb dieser Auslösetemperatur wird in der Regel der Betrieb der Versorgungsstation nicht beeinflusst. Zugleich wird die Signalleitung im Fehlerfall so frühzeitig unterbrochen, dass kritische Betriebszustände zuverlässig vermieden werden können.

Nach einer bevorzugten Ausführungsform der Erfindung ist die ohnehin vorhandene Steuerung der Versorgungsvorrichtung eingerichtet, eine Unterbrechung der Signalleitung zu erkennen. Vorteilhaft kann die Steuerung im Falle der Unterbrechung der Signalleitung den Ladevorgang stoppen, das heißt beenden oder unterbrechen und/oder eine Störung melden beziehungsweise anzeigen. Zusätzlicher Funktionskomponenten bedarf es hierfür nicht. Die ohnehin vorgesehene Steuerung der Versorgungsstation übernimmt die Überwachung der Signalleitung systemimmanent.

Beispielsweise erkennt die Steuerung die Unterbrechung der Signalleitung, wenn auf ein von der Steuerung gesendetes Signal eine Antwort ausbleibt oder ein erwartetes Signal von der Fahrzeugseite nicht bereitgestellt wird. Beispielsweise ist eine Widerstands- oder Kapazitätserkennung vorgesehen und die Steuerung erkennt, dass der Widerstand bzw. die Kapazität der Signalleitung sich nach dem Auslösen der Temperatursicherung ändert.

Nach einer Weiterbildung der Erfindung ist ein Haltekörper vorgesehen, welcher die wenigstens eine Temperatursicherung aufnimmt und die wenigstens eine Ladeleitung relativ zu der Temperatursicherung positioniert. Vorteilhaft wird durch das Vorsehen des Haltekörpers die Installation der Temperatursicherung vereinfacht und die Funktionsfähigkeit gewährleistet. Die relative Lage der an der Temperaturüberwachungsfunktion beteiligten Funktionskomponenten der Versorgungsstation, nämlich der Temperatursicherung selbst und der in Bezug auf die Temperaturentwicklung zu überwachenden Ladeleitung, ist durch den Haltekörper festgelegt.

Der Haltekörper kann zusätzlich dazu dienen, die Ladeleitung und die Temperatursicherung thermisch zu koppeln. Neben den durch die Geometrie des Haltekörpers bestimmten Abständen kann der Haltekörper temperaturleitend ausgebildet sein. Beispielsweise kann der Haltekörper aus einem temperaturleitenden Kunststoff oder aus einem metallischen Werkstoff gebildet sein. Beispielsweise kann ein metallischer Blechkörper den Haltekörper bilden. An den Blechkörper werden dann die wenigstens eine Temperatursicherung und die Ladeleitung angebaut.

Nach einer Weiterbildung der Erfindung umgreift der Haltekörper die Temperatursicherung selbst und/oder die Ladeleitung mantelseitig.

Beispielsweise kann vorgesehen sein, dass der Haltekörper einstückig ausgebildet ist. Hierdurch wird vermieden, dass der Temperaturübergang zwischen zwei montierten Teilkörpern wenig effektiv ist.

Nach einer Weiterbildung der Erfindung sieht die Versorgungsstation eine Mehrzahl von Ladeleitungen vor. Bevorzugt sind drei Ladelastleitungen beziehungsweise Phasenleitungen sowie eine Neutralleitung als Ladeleitung vorgesehen.

Insbesondere kann die Versorgungsstation als eine AC-Versorgungsstation ausgebildet sein. Mittels der AC-Versorgungsstation kann das elektrisch betreibbare Fahrzeug dann wahlweise einphasig, zweiphasig oder dreiphasig geladen werden.

Nach einer Weiterbildung der Erfindung können die Ladelastleitungen und die Neutralleitung einer einzigen Temperatursicherung zugeordnet werden. Die einzige Temperatursicherung überwacht dann die Mehrzahl der Ladeleitungen. Beispielsweise werden die Ladeleitungen in Umfangsrichtung verteilt um die eine Temperatursicherung angeordnet. Es ergibt sich hierdurch ein sehr kompakter und kostengünstiger Aufbau.

Nach einer alternativen Ausführungsform der Erfindung sieht die Versorgungsstation eine Mehrzahl von Temperatursicherungen vor. Die Mehrzahl von Temperatursicherungen dient dazu, unterschiedliche Ladeleitungen in Bezug auf ihre Temperatur beziehungsweise einen Temperaturanstieg zu überwachen. Eine Temperatursicherung kann dabei einer einzigen Ladeleitung oder einer Gruppe von Ladeleitungen zugeordnet sein.

Nach einer Weiterbildung der Erfindung wird die Mehrzahl von Temperatursicherungen einer einzigen Signalleitung zugeordnet. Die Temperatursicherungen sind dann in Reihe verschaltet. Löst eine einzige Temperatursicherung infolge eines Temperaturanstiegs aus, wird die Signalleitung unterbrochen.

Nach einer alternativen Ausführungsform der Erfindung sind die Mehrzahl von Temperatursicherungen verschiedenen Signalleitungen zugeordnet. Die Steuerung überwacht dann die verschiedenen Signalleitungen und erkennt eine Unterbrechung einer einzigen Signalleitung.

Sofern beispielsweise eine AC-Versorgungsstation erfindungsgemäß ausgebildet wird und ein Anschlusselement für einen Typ 2-Stecker vorsieht, sind sieben Anschlusspins realisiert. Fünf der sieben Anschlusspins sind mit den drei Ladelastleitungen, der Neutralleitung und einer Schutz- beziehungsweise PE-Leitung verbunden. Darüber hinaus sind zwei Signalleitungen vorgesehen und den verbleibenden zwei Anschlusspins zugeordnet: die Plug Present- beziehungsweise PP-Leitung sowie die Control Pilot- beziehungsweise CP-Leitung.

In einer bevorzugten Konfiguration werden die drei Ladelastleitungen und die Neutralleitung der AC-Versorgungsstationen in Bezug auf ihre Temperatur überwacht. Eine Temperaturüberwachung der Schutzleitung unterbleibt. Der Schutzleitung ist insofern keine Temperatursicherung zugeordnet. Die wenigstens eine Temperatursicherung ist bevorzugt der CP-Leitung als Signalleitung zugeordnet.

Nach einer Weiterbildung der Erfindung ist die Temperatursicherung als eine irreversible Temperatursicherung realisiert, die nur einmal auslösen und die Signalleitung unterbrechen und dann von einer Fachkraft ausgetauscht werden muss. Vorteilhaft wird hierdurch sichergestellt, dass die Temperatursicherung nach einem Auslösefall ausgetauscht werden muss. In dem Zuge kann und sollte die Versorgungsstation einer Überprüfung unterzogen werden, da im Fehlerfall häufig weitere Funktionskomponenten der Versorgungsstation beschädigt beziehungsweise vorgeschädigt werden und ein sicherer Weiterbetrieb der Versorgungsstation nicht ohne Weiteres gewährleistet ist. Zudem sind die irreversiblen Temperatursicherungen sehr kostengünstig.

Nach einer alternativen Ausführungsform der Erfindung werden manuell rückstellbare Temperatursicherungen verwendet. Vorteilhaft erübrigt sich hier ein Austausch der Temperatursicherungen nach einem Fehlerfall, wenn die Fachkraft sich vom ordnungsgemäßen Zustand der Versorgungsstation überzeugt hat beziehungsweise diesen wiederhergestellt hat und die Temperatursicherung reaktiviert.

Nach einer weiteren alternativen Ausführungsform der Erfindung werden sich selbst rückstellende Temperatursicherungen verwendet. Vorteilhaft wird hierbei die Unterbrechung der Signalleitung rückgängig gemacht, wenn die Temperatur sinkt. Es ist insofern nicht zwingend notwendig, nach einem Fehlerfall eine Fachkraft zu der Versorgungsstation zu schicken.

Als elektrisch betreibbare Fahrzeuge im Sinne der Erfindung gelten insbesondere alle Automobile (Pkw, Lkw, Wohnmobile, Zweiräder, Busse, Transporter und andere), Schienenfahrzeuge (insbesondere Lokomotiven), Wasserfahrzeuge (Boote und Schiffe), Luftfahrzeuge sowie Anhänger (Wohnanhänger), mobile Verkaufsstände und andere. Die elektrische Energie kann für Fahrzeuge mit und ohne eigenen Energiespeicher zur Verfügung gestellt werden.

Eine Versorgungsstation im Sinne der Erfindung dient der Bereitstellung elektrischer Energie für elektrisch betreibbare Fahrzeuge im öffentlichen oder privaten Bereich. Darüber hinaus kann vorgesehen sein, dass die Versorgungsstation genutzt wird, um im Rahmen eines übergeordneten Energie- und/oder Lastmanagements Energie aus einem Energiespeicher des an die Versorgungsstation angeschlossenen elektrisch betreibbaren Fahrzeugs in das Versorgungsnetz ein- beziehungsweise zurückzuspeisen. Auf diese Weise können Spitzenbedarfe abgedeckt und das Versorgungsnetz stabilisiert werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung. Sie haben keinen einschränkenden Charakter.

Es zeigen:
- Fig. 1: eine Prinzipdarstellung eines elektrisch kontaktierten Anschlusselements einer Versorgungsstation mit einer Temperatursicherung,
- Fig. 2: eine erste perspektivische Wiedergabe einer der elektrischen Kontaktierung des Anschlusselements der Versorgungsstation dienenden Anschlussanordnung mit vier Ladeleitungen, einer Signalleitung und der von einem Haltekörper umgriffenen Temperatursicherung in einer ersten Ausführungsform,
- Fig. 3: eine Seitenansicht der Anschlussanordnung nach Fig. 2,
- Fig. 4: eine zweite perspektivische Wiedergabe der Anschlussanordnung nach Fig. 2,
- Fig. 5: eine zweite Ausführungsform der Anschlussanordnung in einer Seitenansicht,
- Fig. 6: eine perspektivische Wiedergabe einer dritten Ausführungsform der Anschlussanordnung in einer Seitenansicht,
- Fig. 7: eine Seitenansicht der Anschlussanordnung nach Fig. 6,
- Fig. 8: eine Prinzipdarstellung einer vierten Ausführungsform der Anschlussanordnung mit vier Ladeleitungen und zwei Temperatursicherungen,
- Fig. 9: eine Prinzipdarstellung einer fünften Ausführungsform der Anschlussanordnung mit vier Ladeleitungen und zwei Temperatursicherungen und
- Fig. 10: eine Prinzipdarstellung einer sechsten Ausführungsform der Anschlussanordnung mit vier Ladeleitungen und vier Temperatursicherungen.

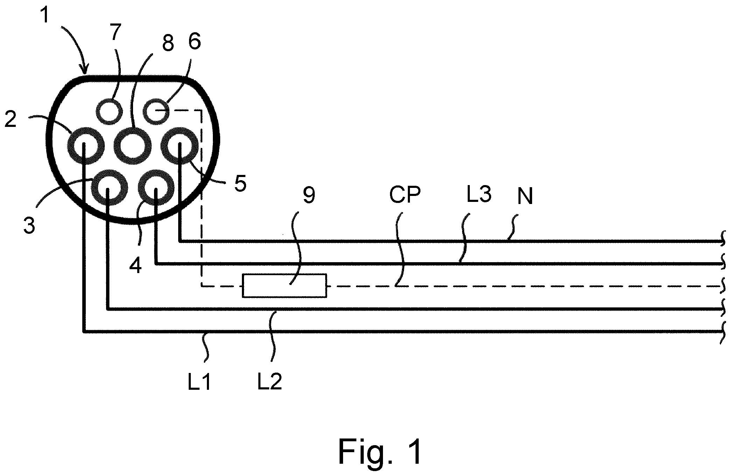

Eine der Bereitstellung elektrischer Energie für elektrisch betreibbare Fahrzeuge dienende Versorgungsstation mit einer Temperaturüberwachungsfunktion gemäß Fig. 1 ist als AC-Versorgungsstation ausgeführt. Sie umfasst eine der Verbindung der Versorgungsstation mit dem elektrisch betreibbaren Fahrzeug dienendes Anschlusselement 1 sowie eine Mehrzahl von Ladeleitungen L1, L2, L3, N und eine Signalleitung CP. In der Signalleitung CP ist eine Temperatursicherung 9 vorgesehen.

Das Anschlusselement 1 ist exemplarisch als Typ 2-Anschlusselement 1 ausgebildet. Es sieht insgesamt sieben Anschlusspins 2, 3, 4, 5, 6, 7, 8 vor. Vier Anschlusspins 2, 3, 4, 5 sind den vier Ladeleitungen L1, L2, L3, N zugeordnet. Ein weiterer Anschlusspin 6 dient der Kontaktierung der Signalleitung CP mit der Temperatursicherung 9. Ein sechster Anschlusspin 7 dient der elektrischen Kontaktierung einer weiteren, in Fig. 1 nicht dargestellten Signalleitung. Ebenso ist der siebte Anschlusspin 8 einer nicht dargestellten Schutzleitung zugeordnet.

Die Temperatursicherung 9 ist beispielsweise als eine einmalig betätigbare, irreversible Schmelzsicherung 9 realisiert. Die Temperatursicherung 9 ist in einem geringen Abstand zu dem Anschlusselement 1 installiert. Die Ladeleitungen L1, L2, L3, N sind derart benachbart zu der Temperatursicherung 9 verlegt, dass ein Anstieg der Temperatur in den Ladeleitungen L1, L2, L3, N zu einem Anstieg der Temperatur in der Temperatursicherung 9 führt.

Die Temperatursicherung 9 ist so realisiert, dass beim Überschreiten einer bauartspezifischen Auslösetemperatur die Temperatursicherung 9 auslöst und die ihr zugeordnete Signalleitung CP unterbricht. Ein Informationsaustausch beziehungsweise ein Signalfluss über die unterbrochene Signalleitung CP ist dann nicht mehr möglich. Vor einer Wiederinbetriebnahme der Versorgungsstation muss die Temperatursicherung 9 ausgetauscht werden.

Die Verwendung einer einmalig betätigbaren, irreversiblen Temperatursicherung 9 ist eine von verschiedenen Optionen. Alternativ kann eine manuell rückstellbare Temperatursicherung 9 oder eine sich selbst rückstellende Temperatursicherung 9 verwendet werden.

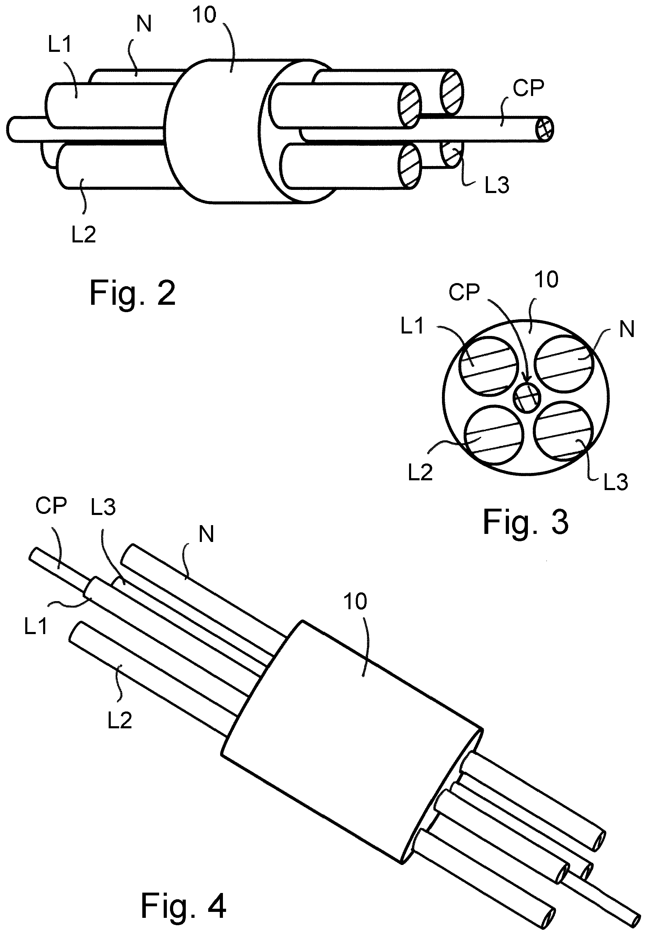

In den Fig. 2 bis 4 ist eine der elektrischen Kontaktierung des Anschlusselements 1 dienende Anschlussanordnung abgebildet. Die Anschlussanordnung umfasst die vier Ladeleitungen L1, L2, L3, N, die Signalleitung CP, einen Haltekörper 10 und die von dem Haltekörper 10 vollständig umschlossene und aus diesem Grund nicht sichtbare Temperatursicherung 9. Der Haltekörper 10 dient der Aufnahme der Temperatursicherung 9 und darüber hinaus der räumlichen Zuordnung der Ladeleitungen L1, L2, L3, N zur Temperatursicherung 9. Exemplarisch sind die Ladeleitungen L1, L2, L3, N in Umfangsrichtung im Wesentlichen regelmäßig verteilt um die Temperatursicherung 9 und die Signalleitung CP herum angeordnet.

Der Haltekörper 10 kann beispielsweise aus einem temperaturleitenden, elektrisch isolierenden Kunststoffmaterial hergestellt sein. Bevorzugt ist der Haltekörper 10 einstückig hergestellt. Die Signalleitung CP sowie die Ladeleitungen L1, L2, L3, N sind durch den Haltekörper 10 hindurchgeführt und jedenfalls im Bereich des Haltekörpers 10 im Wesentlichen parallel zueinander orientiert.

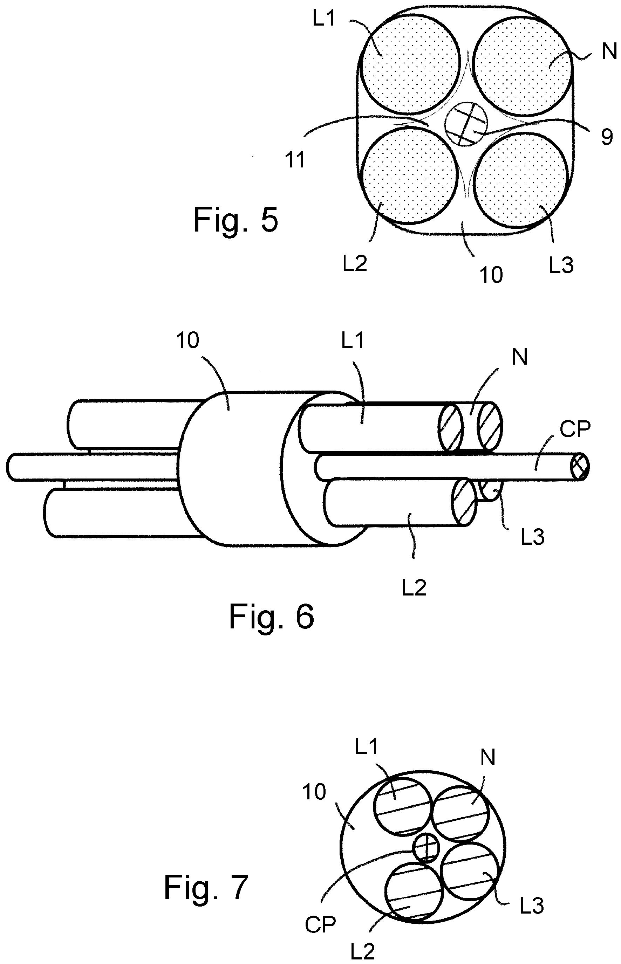

Fig. 5 zeigt eine zweite Ausführungsform der Anschlussanordnung in einer Seitenansicht. Der Haltekörper 10 nimmt wie gehabt die vier Ladeleitungen L1, L2, L3, N auf. In seinem Zentrum sieht der Haltekörper 10 eine Ausnehmung 11 vor. In die Ausnehmung 11 ist die Temperatursicherung 9 vorgesehen, die in der bekannten Weise in die nicht dargestellte Signalleitung CP integriert ist. Die räumliche Zuordnung der vier Ladeleitungen L1, L2, L3, N zu der Temperatursicherung 9 ist so gewählt, dass eine Temperaturerhöhung in einer einzigen Ladeleitung L1, L2, L3, N, einer Teilmenge der vier Ladeleitungen L1, L2, L3, N oder allen Ladeleitungen L1, L2, L3, N zum Anstieg der Temperatur in der Temperatursicherung 9 führt.

Eine dritte Ausführungsform der Anschlussanordnung ist in den Fig. 6 und 7 dargestellt. Die Ladeleitungen L1, L2, L3, N sind der Signalleitung CP wie gehabt mantelseitig, jetzt jedoch ungleichmäßig verteilt zugeordnet. Der Haltekörper 10 umgreift die Ladeleitungen L1, L2, L3, N sowie die Signalleitung CP und nimmt darüber hinaus die Temperatursicherung 9 in seinem Inneren auf.

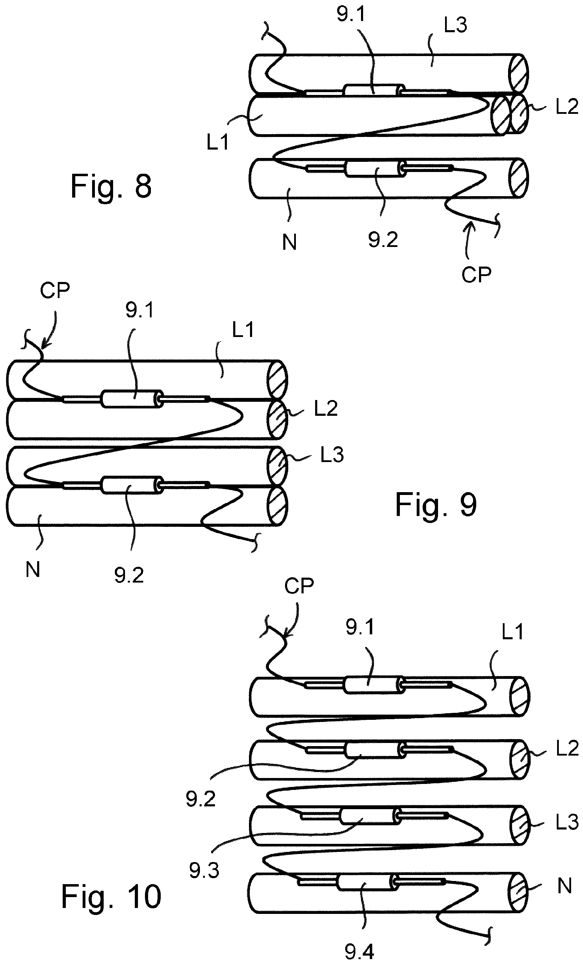

Die Fig. 8 bis 10 zeigen drei weitere Ausführungsformen der Anschlussanordnung mit jeweils mehr als einer Temperatursicherung 9.1, 9.2, 9.3, 9.4.

In Fig. 8 ist eine vierte Ausführungsform der Anschlussanordnung vorgesehen, bei der zwei zueinander in Reihe verschaltete Temperatursicherungen 9.1, 9.2 in der Signalleitung CP installiert sind. Das Auslösen einer beliebigen einzigen Temperatursicherung 9.1, 9.2 führt dazu, dass die Signalleitung CP unterbrochen wird.

Drei der vier Ladeleitungen L1, L2, L3, N sind als Ladelastleitungen L1, L2, L3 ausgebildet. Sie sind gemeinsam einer ersten Temperatursicherung 9.1 der Anschlussanordnung zugeordnet. Eine Neutralleitung N bildet die vierte Ladeleitung. Sie ist einer zweiten Temperatursicherung 9.2 zugeordnet.

Fig. 9 zeigt eine fünfte Ausführungsform der Anschlussanordnung mit ebenfalls zwei Temperatursicherungen 9.1, 9.2. Zwei Ladelastleitungen L1, L2 sind der ersten Temperatursicherung 9.1 zugeordnet. Eine weitere Ladelastleitung L3 sowie die Neutralleitung N sind der zweiten Temperatursicherung 9.2 zugeordnet. Die Temperatursicherungen 9.1,9.2 sind wie gehabt in Reihe verschaltet und der Signalleitung CP zugeordnet.

Eine sechste Ausführungsform der Anschlussanordnung gemäß Fig. 10 sieht vier zueinander in Reihe verschaltete Temperatursicherungen 9.1, 9.2, 9.3, 9.4 vor. Jede Temperatursicherung 9.1, 9.2, 9.3, 9.4 ist einer einzelnen Ladeleitung L1, L2, L3, N zugeordnet und überwacht diese in Bezug auf einen Temperaturanstieg.

Den vorstehend beschriebenen Ausführungsformen der Erfindung ist gemein, dass die Unterbrechung der Signalleitung CP durch eine in den Figuren nicht dargestellte Steuerung der Versorgungsstation erfolgt. Die Steuerung dient unter anderem der Kommunikation der Versorgungsstation mit dem elektrisch betreibbaren Fahrzeug. Die Kommunikation erfolgt über die Signalleitung CP. Eine Unterbrechung der Signalleitung CP kann von der Steuerung beispielsweise erkannt werden, wenn die Kommunikation abbricht und/oder Signale vom Fahrzeug nicht mehr empfangen werden. Beispielsweise kann eine Unterbrechung der Signalleitung CP erkannt werden, indem ein der Signalleitung CP zugeordneter Widerstandswert beziehungsweise eine Kapazität der Signalleitung CP ermittelt beziehungsweise überwacht wird. Wird die Signalleitung CP unterbrochen, ändert sich der Widerstandswert beziehungsweise die Kapazität. Die Änderung wird erkannt und die Steuerung kann den Ladevorgang stoppen.

Gleiche Bauteile und Bauteilfunktionen sind durch gleiche Bezugszeichen gekennzeichnet.

## Patentansprüche

1. Versorgungsstation für ein elektrisch betreibbares Fahrzeug mit einer Temperaturüberwachungsfunktion umfassend ein Anschlusselement (1) mit einer Mehrzahl von Anschlusspins (2, 3, 4, 5, 6, 7, 8) sowie wenigstens eine Ladeleitung (L1, L2, L3, N) und wenigstens eine Signalleitung (CP), wobei die Ladeleitung (L1, L2, L3, N) zu mindestens einem Anschlusspin (2, 3, 4, 5) des Anschlusselements geführt ist und der Bereitstellung der Ladeleistung für das elektrisch betreibbare Fahrzeug dient und wobei die Signalleitung (CP) von einer Steuereinheit zu einem weiteren Anschlusspin (6) des Anschlusselements (1) geführt ist und eingerichtet ist, Signale zu übertragen, **dadurch gekennzeichnet, dass** in der Signalleitung (CP) eine Temperatursicherung (9, 9.1, 9.2, 9.3, 9.4) vorgesehen ist, welche dazu eingerichtet ist, beim Überschreiten einer Auslösetemperatur die Signalleitung (CP) selbsttätig zu unterbrechen, und dass die wenigstens eine Ladeleitung (L1, L2, L3, N) sich derart benachbart zu der Temperatursicherung (9, 9.1, 9.2, 9.3, 9.4) erstreckt, dass eine Temperaturerhöhung in der wenigstens einen Ladeleitung (L1, L2, L3, N) von der Temperatursicherung (9, 9.1, 9.2, 9.3, 9.4) detektierbar ist.

2. Versorgungsstation nach Anspruch 1, **dadurch gekennzeichnet, dass** die Steuerung eingerichtet ist, eine Unterbrechung der Signalleitung (CP) zu erkennen.

3. Versorgungsstation nach Anspruch 1 oder 2, **dadurch gekennzeichnet, dass** ein Haltekörper (10) vorgesehen ist, welcher die wenigstens eine Temperatursicherung (9, 9.1, 9.2, 9.3, 9.4) aufnimmt und die wenigstens eine Ladeleitung (L1, L2, L3, N) relativ zu der Temperatursicherung (9, 9.1, 9.2, 9.3, 9.4) positioniert.

4. Versorgungsstation nach Anspruch 3, **dadurch gekennzeichnet, dass** der Haltekörper (10) die wenigstens eine Temperatursicherung (9, 9.1, 9.2, 9.3, 9.4) mantelseitig umgreift und/oder dass die wenigstens eine Ladeleitung (L1, L2, L3, N) und/oder die wenigstens Signalleitung (CP) durch den Haltekörper (10) hindurchgeführt sind.

5. Versorgungsstation nach einem der Ansprüche 1 bis 4, **dadurch gekennzeichnet, dass** eine Mehrzahl von Ladeleitungen (L1, L2, L3, N) und bevorzugt drei Ladelastleitungen (L1, L2, L3) sowie eine Neutralleitung (N) als Ladeleitungen (L1, L2, L3, N) vorgesehen sind.

6. Versorgungsstation nach Anspruch 5, **dadurch gekennzeichnet, dass** die Versorgungsstation als eine AC-Versorgungsstation ausgebildet und zum einphasigen und/oder mehrphasigen Laden eingerichtet ist.

7. Versorgungsstation nach Anspruch 5 oder 6, **dadurch gekennzeichnet, dass** die Mehrzahl der Ladeleitungen (L1, L2, L3, N) in eine Umfangsrichtung verteilt um die Temperatursicherung (9, 9.1, 9.2, 9.3, 9.4) herum angeordnet sind.

8. Versorgungsstation nach einem der Ansprüche 1 bis 7, **dadurch gekennzeichnet, dass** eine Mehrzahl von Temperatursicherungen (9, 9.1, 9.2, 9.3, 9.4) vorgesehen ist und dass die Mehrzahl von Temperatursicherungen (9, 9.1, 9.2, 9.3, 9.4) unterschiedlichen Ladeleitungen (L1, L2, L3, N) zugeordnet ist zur Detektion eines Temperaturanstiegs in wenigstens einer der Ladeleitungen (L1, L2, L3, N).

9. Versorgungsstation nach Anspruch 8, **dadurch gekennzeichnet, dass** die Mehrzahl von Temperatursicherungen (9, 9.1, 9.2, 9.3, 9.4) in Reihe verschaltet und einer einzigen Signalleitung (CP) zugeordnet ist.

10. Versorgungsstation nach Anspruch 8, **dadurch gekennzeichnet, dass** eine Mehrzahl von Signalleitungen (CP) vorgesehen ist und dass die Mehrzahl von Temperatursicherungen (9, 9.1, 9.2, 9.3, 9.4) unterschiedlichen Signalleitungen (CP) zugeordnet ist.

11. Versorgungsstation nach einem der Ansprüche 1 bis 10, **dadurch gekennzeichnet, dass** der Haltekörper (10) einstückig hergestellt ist und/oder dass der Haltekörper (10) aus einem temperaturleitenden Kunststoff und/oder aus Metall gebildet ist.

12. Versorgungsstation nach einem der Ansprüche 1 bis 11, **dadurch gekennzeichnet, dass** die wenigstens eine Temperatursicherung (9, 9.1, 9.2, 9.3, 9.4) als eine irreversible oder als eine rückstellbare oder als eine sich selbst rückstellende Temperatursicherung (9, 9.1, 9.2, 9.3, 9.4) ausgebildet ist.

13. Versorgungsstation nach einem der Ansprüche 1 bis 12, **dadurch gekennzeichnet, dass** die Auslösetemperatur der wenigstens einen Temperatursicherung (9, 9.1, 9.2, 9.3, 9.4) im Bereich von 85 bis 105 °C liegt.
